(19) Europäisches Patentamt
European Patent Office
Office européen des brevets

(11) Publication number: **0 074 661**
**B1**

(12) # EUROPEAN PATENT SPECIFICATION

(45) Date of publication of patent specification: **09.10.85**

(51) Int. Cl.$^4$: **C 08 F 2/32,** C 08 F 220/56

(21) Application number: **82108447.2**

(22) Date of filing: **13.09.82**

(54) **Process for producing a polymer water-in-oil emulsion.**

(30) Priority: **14.09.81 US 302108**

(43) Date of publication of application:
**23.03.83 Bulletin 83/12**

(45) Publication of the grant of the patent:
**09.10.85 Bulletin 85/41**

(84) Designated Contracting States:
**AT BE CH DE FR GB IT LI LU NL SE**

(56) References cited:
**FR-A-2 140 116**
**GB-A- 870 711**

**DERWENT JAPANESE PATENT REPORT, vol. 76, no. 25, 16th June 1976, Section D, page 2**

(73) Proprietor: **UNION CARBIDE CORPORATION**
**Old Ridgebury Road**
**Danbury Connecticut 06817 (US)**

(72) Inventor: **Fan, You-Ling**
**3 Heritage Court**
**East Brunswick, N.J. 08816 (US)**
Inventor: **Brode, George Lewis**
**653 Carlene Drive**
**Bridgewater, N.J. 08807 (US)**

(74) Representative: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 074 661 B1

**Description**

This invention is directed to a semi-continuous process for producing a polymer water-in-oil emulsion.

Water-in-oil emulsion processes, in which a water-soluble monomer is emulsified in an oil phase and polymerized therein, are well known in the art. For example, U.S. Patent 2,284,393 describes such a process wherein water-soluble monomers are polymerized to high molecular weight polymers or copolymers utilizing a water-in-oil emulsion polymerization procedure. In the polymerization process described in said patent, one or a plurality of water-soluble monomers, or an aqueous solution thereof, is emulsified in an oil phase by means of a water-in-oil emulsifier and emulsion polymerized under free radical forming conditions to form a polymeric latex in which the oil phase is the dispersion medium.

U.S. 3,284,393 further states that the inert hydrophobic liquid, in which a water-in-oil emulsifying agent is dissolved, is added to a reactor, and then an aqueous solution or monomer, mixed monomers, or monomers per se, is added to the oil phase until the monomer phase is emulsified in the oil phase and the polymerization is carried out. The patent states that the order of addition of reaction media ingredients is not important. The examples in the patent describe a batch reaction, i.e. a reaction in which all of the ingredients are added to the reactor and polymerization takes place.

However, it is difficult to control the compositional uniformity of the product produced by a batch reaction and also it is difficult to control the exotherm of the reaction. Difficulty in controlling uniformity results in a broad and often erratic compositional distribution. Inability to control the exotherm of the reaction results in the formation of undesirable low molecular weight polymer, or a branched polymer, and/or agglomeration of the reaction mixture.

It has now been found that the product polymer water-in-oil emulsion produced by the semi-continuous process of the invention has high compositional uniformity. The product formed by the semi-continuous process of this invention is much more uniform than that produced by a batch process. Also, the process of this invention allows safer control of the exotherm.

Another advantage of the semi-continuous process is that the polymerization is carried out at a faster rate at the initial stage of polymerization, which results in a shorter reaction time, and a more stable water-in-oil emulsion that can be achieved by carrying out the polymerization by a batch process, in reactors having identical cooling capabilities.

By the term "semi-continuous" as used herein, is meant a process whereby the monomer emulsion is fed continuously into the reactor during the course of polymerization. In contradistinction, all the monomer emulsion is charged to a reactor at the beginning of the reaction in a batch process.

This invention is directed to a semi-continuous process for producing a polymer water-in-oil emulsion which process comprises:

(a) combining: (i) an aqueous solution comprising at least one water-soluble monomer, and (ii) a mixture comprising a hydrophobic liquid, a hydrophobic monomer and an oil-soluble surfactant:

(b) homogenizing the mixture from (a) to form a water-in-oil emulsion;

(c) deoxygenating said homogenizing water-in-oil emulsion;

(d) continually adding the homogenized water-in-oil emulsion to a reactor while adding thereto a deoxygenated initiator solution;

(e) heating the mixture from (a) under polymerization conditions so as to form a polymer water-in-oil emulsion; and

(f) recovering a polymer water-in-oil emulsion.

A water-soluble surfactant is generally added to the recovered water-in-oil emulsion (f). These water-in-oil emulsions are solubilized, or inverted, in the presence of water so that the polymer readily goes into solution.

These solutions are suitable for use as flocculants for water purification, such as to facilitate the settling of particles in phosphate slimes.

In the first step of the process of this invention, an aqueous solution containing a water-soluble monomer is combined with a mixture containing a hydrophobic liquid, a hydrophobic monomer and an oil-soluble surfactant. This combination of materials is homogenized to form a water-in-oil emulsion.

The aqueous solution contains a mixture of water soluble monomers. These monomers have a water solubility of at least 5 weight percent and include acrylamide, methacrylamide, acrylic acid, methacrylic acid, and their alkali metal salts, aminoalkyl acrylate, aminoalkyl methacrylate, dialkylaminoalkyl acrylate, benzyl sulfonates, maleic anhydride, and the like. The preferred monomers are acrylamide and acrylic acid.

If the acrylic acid is used as a monomer it is reacted with a base, preferably with an equivalent amount of base, such as sodium hydroxide, so that the sodium acrylate solution has a pH of from about 5.0 to about 10.0, preferably from about 6.5 to about 8.5, depending on the type and amount of base employed. This solution is combined with another water soluble monomer, such as acrylamide, and then with water to form an aqueous phase.

The aqueous phase contains from 45 to 80, preferably from 48 to 78 weight percent of a combination of water and water soluble monomer(s).

The mixture which is combined with the aqueous solution containing the water-soluble monomer(s) contains a hydrophobic liquid, a hydrophobic monomer and an oil-soluble surfactant.

The hydrophobic liquids suitable for use herein include benzene, xylene, toluene, mineral oils,

kerosenes, petroleum, and mixtures thereof. A preferred hydrophobic liquid is Isopar M (sold by Humble Oil and Refinery Company).

The hydrophobic monomer(s) which may be used in this invention include one or more vinyl esters, such as vinyl acetate, alkyl acrylates, such as ethylacrylate, alkyl methacrylates such as methyl methacrylate, vinyl ethers such as alkyl vinyl ethers, e.g. butylvinyl ether, acrylonitrile, styrene and its derivatives, such as α-methylstyrene, N-vinyl carbazole.

The surfactants suitable for use in this invention are usually of the oil-soluble type having a Hydrophile-Lipophile Balance (HLB) value of from about 1 to about 10, preferably from about 2 to about 6. These surfactants are normally referred to as the water-in-oil type. The surfactants include fatty acid esters, such as sorbitan monolaurate, sorbitan monostearate, sorbitan monooleate, sorbitan trioleate, mono and diglycerides, such as mono and diglycerides obtained from the gylcerolysis of edible fats, polyoxyethylenated fatty acid esters, such as polyoxyethylenated (4) sorbitan monostearate, polyoxyethylenated linear alcohol, such as Tergitol 15—S—3 and Tergitol 25—L—3 (both supplied by Union Carbide Corp.), polyoxyethylene sorbitol esters, such as polyoxyethylene sorbitol beeswax derivative, polyoxyethylenated alcohols such as polyoxyethylenated (2) cetyl ether.

The mixture of the aqueous phase and oil phase contains from 15 to 50, preferably from 22 to 42 weight percent of the hydrophobic liquid and hydrophobic monomer(s), based on the total weight of the composition.

The aqueous solution (i) containing the water-soluble monomer(s) is combined with the mixture containing a hydrophobic liquid, a hydrophobic monomer(s) and an oil-soluble surfactant. This mixture is homogenized to form a water-in-oil emulsion. Homogenization takes place by subjecting the mixture to high shear mixing techniques which are generally well-known in the art. These include the use of homogenizers, high speed mixers and any other techniques for obtaining high shear mixing. The homogenization is carried out at a temperature of from about 10 to about 40°C, preferably from about 15 to 25°C. The homogenization may be carried out either continuously or in a batch process.

The emulsion so prepared have a rather narrow particle size distribution. The diameters of the majority of the particles range from 0.2 to 5 μm.

The water-in-oil emulsion so produced comprises:

(a) An aqueous phase constituting from 45 to 80, preferably from 48 to 78 weight percent and containing water-soluble monomer(s) wherein the monomers constitute from 20 to 60, preferably from 30 to 50 weight percent;

(b) A hydrophobic liquid and hydrophobic monomer(s) constituting from 15 to 50, preferably from 20 to 40 weight percent;

(c) An oil-soluble surfactant constituting from 0.1 to 5, preferably from 1 to 3 weight percent.

After forming the water-in-oil emulsion, it is generally deoxygenated, by for example, subjecting the emulsion to a vacuum of from 50 to 500, preferably from 133 to 255 mbar (100 to 200 mm of mercury) under an inert gas atmosphere at a temperature of from 10 to 40°C, either continuously or as a batch process.

A reactor is continuously charged with the deoxygenated water-in-oil emulsion. Preferably, an initial charge of between 20 to 50 percent of the deoxygenated emulsion is added to the reactor. Most preferably, the reactor is charged with an amount of deoxygenated water-in-oil emulsion so as to cover the agitator blades therein. The amount charged to the reactor depends on the geometry and size of the reactor.

Also, a catalyst or initiator useful in polymerizing ethylenically unsaturated monomers is added to the reactor. These catalysts include one or more azo and/or peroxide containing compounds, such as t-butyl hydroperoxide, t-butyl perbenzoate, benzoyl peroxide, ammonium persulfate, cumene hydroperoxide, 2,2′-azobis(isobutyronitrile), 2,2′-azobis(2,4-dimethyl-valeronitrile), redox catalysts, and others known in the art. These catalysts are added to the reactor in the form of a solution, i.e., the catalyst is dissolved in a solvent, such as a hydrocarbon liquid, i.e., toluene. The catalyst solution contains from 1 to 10, preferably from 3 to 6 weight percent of the catalyst.

From 1 to 99, preferably from 20 to 60 percent of the catalyst solution is initially added to the reactor containing the water-in-oil emulsion.

The remaining water-in-oil emulsion and catalyst solution are then continuously fed into the reactor.

The polymerization is carried out at a temperature of from 30 to 70°C, preferably from 40 to 55°C, most preferably from 48 to 52°C, for 1 to 10 hours, preferably from 2 to 6 hours. The reaction time depending on the size of the reactor and the polymerization conditions.

The polymerization is generally carried out at atmospheric pressure, although subatmospheric and superatmospheric pressures may be used. The polymerization is preferably carried out under an inert atmosphere, such a helium, argon or nitrogen.

The polymerization reaction generates considerable heat which must be removed. Generally, the heat is dissipated by normal cooling facilities.

The polymerization reaction rate may be controlled by the introduction of small quantities of air (atmospheric air and/or oxygen) into the reaction. The air may be introduced, i.e. sparged, either intermittently or continuously into the reactor to control the reaction temperature. When a continuous air sparging is employed, the amount of oxygen in the reaction medium must be carefully controlled so as to achieve the desired rate of polymerization. An oxygen content of from 0.01 to 1.0, preferably from 0.02 to

0.50 parts per million is desirable. When the air is introduced intermittently, a flow rate of from 0.36 to 36.2 $cm^3$/min/kg of reactor charge (0.01 to 1.0, preferably 0.05 to 0.5 cubic inches per minute, per pound of reactor charge) is desirable. The duration of air injection may vary from a fraction of a second to a few seconds, and it may be repeated as many times as necessary until a desired rate of polymerization is achieved.

After the polymerization is complete, an antioxidant may be added to the reaction mass. Any organic antioxidant suitable for the inhibition of free radical reactions may be used. The antioxidant is generally dissolved in a suitable solvent. The preferred antioxidants include substituted phenols, such as Ionol, thiobisphenol, such as Santonox-R, and hydroquinone derivatives, such as the monomethyl ether of hydroquinone. The suitable solvents include toluene, benzene, xylene, diethyl ether, methyl acetate. The antioxidant is present in the solution in amounts of from 1 to 30, preferably from 5 to 10 percent.

The antioxidant solution is added to the reaction mass in amounts of from 0.05 to 5 parts per hundred parts of resin.

Addition of the antioxidant may be commenced either at the end of the polymerization or after the reaction mixture has been cooled to ambient temperature.

The reaction mass is generally cooled to about 25°C and the polymer water-in-oil emulsion recovered.

The polymer water-in-oil emulsion is described in EP—A—74662 filed in the name of Union Carbide Corporation, titled "Polymer Water-in-Oil-Emulsions", and filed on the same date as this application.

The polymer water-in-oil emulsion is described in EP—A—74662 comprises:

(a) an aqueous phase comprising from 60 to 80, preferably from 68 to 78 weight percent, and containing therein from 30 to 70, preferably from 35 to 55 weight percent of polymer and from 30 to 70, preferably from 45 to 65 weight percent of water, based on the total weight of the formulation;

(b) a hydrophobic liquid constituting from 15 to 39.5, preferably from 19 to 31 weight percent, and

(c) an oil-soluble surfactant constituting from 0.5 to 5, preferably from 1 to 3 weight percent (based on the total weight of the emulsion).

The polymers produced by the process of this invention have an intrinsic viscosity of from 2 to 40, preferably from 10 to 35, and most preferably from 18 to 30 dl/g as measured in a one normal (N) aqueous sodium chloride solution at 25°C.

The polymers produced by a process of this invention are copolymers, terpolymers or tetrapolymers. The polymers may be anionic, cationic or nonionic.

The polymers are preferably of the following general formula:

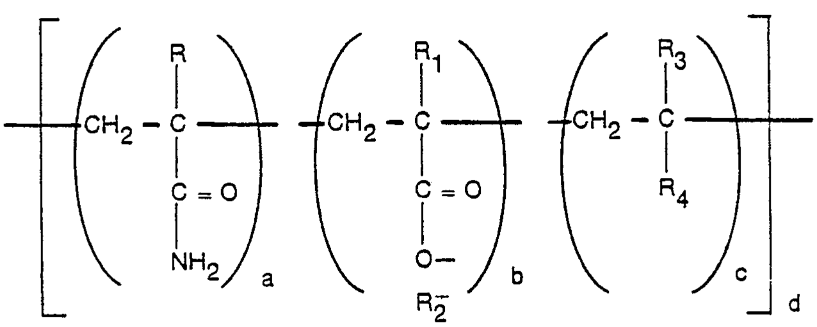

wherein R, $R_1$ and $R_3$ are independently hydrogen or methyl, $R_2^+$ is an alkali metal ion, such as $Na^+$ or $K^+$, $R_4$ is $OR_5$, where $R_5$ is an alkyl group having up to 5 carbon atoms,

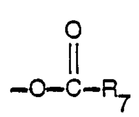, wherein $R_7$ is either methyl or ethyl, 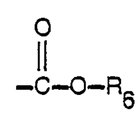,

phenyl, substituted phenyl, CN, or 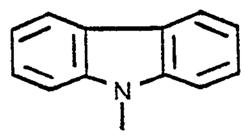,

and $R_6$ is an alkyl group having up to 8 carbon atoms, wherein (a) is from 0 to about 90, preferably from about 30 to about 60 percent, (b) is from 0 to about 90, preferably from about 30 to about 60 percent, (c) is from about 0.2 to about 20, preferably from about 1 to about 10 percent, with the proviso that (a) + (b) + (c) equal 100, and (d) is an integer of from about 1,000 to about 500,000.

Under certain conditions, the alkoxy or acyloxy groups in the polymer may be partially hydrolyzed to

the corresponding alcohol group and yield a tetrapolymer of the following general formula:

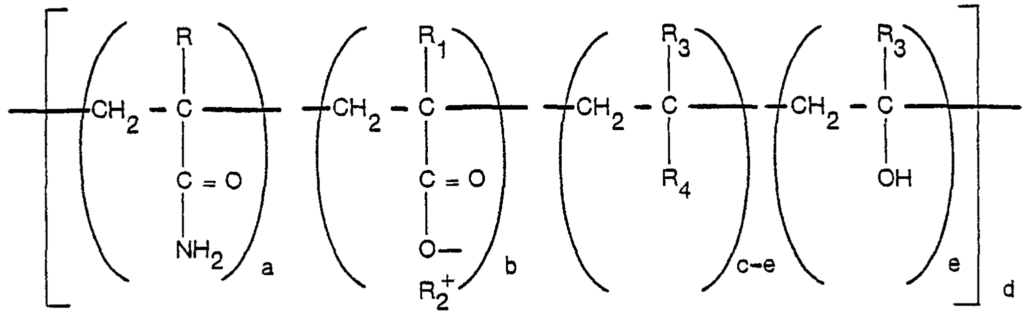

wherein R, $R_1$, $R_2^+$, $R_3$, $R_4$, a, b, c, and d are as previously defined and e is from about 0.1 to less than about 20 percent;

The preferred polymers are terpolymers of the following formula:

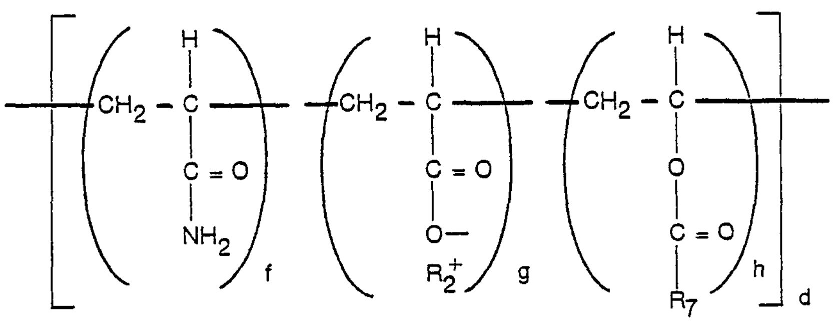

wherein $R_2^+$ is $Na^+$ or $K^+$, $R_7$ is methyl, ethyl, or butyl, and f is from about 5 to about 90, preferably from about 30 to about 60 percent, g is from about 5 to 90, preferably from about 30 to 60 percent h is from about 0.2 to about 20, with the proviso that (f) + (g) + (h) equal 100 and d is as previously defined.

The preferred tetrapolymers are of the following formula:

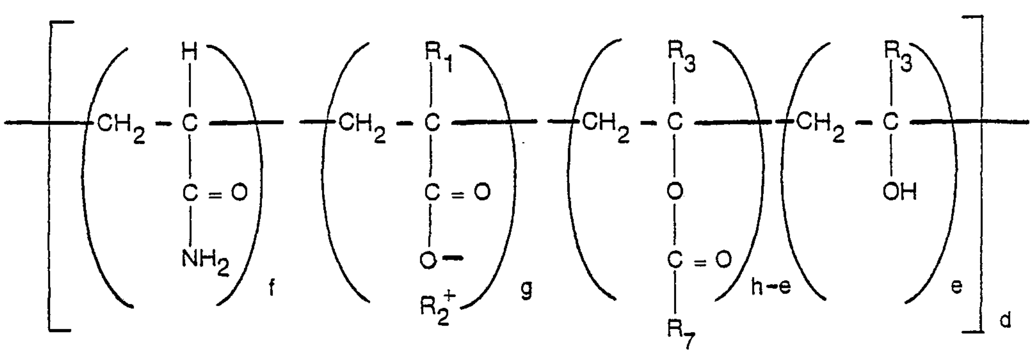

wherein $R_1$, $R_2^+$, $R_3$, $R_7$, f, g, h, d and e are as previous defined.

If desired, the polymer may be recovered by, for example, coagulation in a large excess of a nonsolvent for the polymer, such as isopropyl alcohol. The polymer is then collected by filtration and subsequently dried.

After the water-in-oil emulsion is prepared, a water-soluble inverting surfactant may be added thereto. The surfactants which may be used include polyoxyethylene alkyl phenol, polyoxyethylene (10 mole) cetyl ether, polyoxyethylene alkyl-aryl ether, quarternary ammonium derivatives, potassium oleate, N-cetyl N-ethyl morpholinium ethosulfate, sodium lauryl sulfate, condensation products of high fatty alcohols with ethylene oxide, such as the reaction product of oleyl alcohol with 10 ethylene oxide units; condensation products of alkylphenols and ethylene oxide, such as the reaction products of isooctylphenol with 12 ethylene oxide units; condensation products of fatty acid amines with five, or more, ethylene oxide units; ethylene oxide condensation products of polyhydric alcohol partial higher fatty esters, and their inner anhydrides (mannitolanhydride, called Mannitan, and sorbitol-anhydride, called Sorbitan). The preferred surfactants are ethoxylated nonyl phenols, ethoxylated nonyl phenol formaldehyde resins.

The inverting surfactant is used in amounts of from 0.1 to 20, preferably from 1 to 10 parts per one hundred parts of the polymer.

The water-in-oil emulsion containing the inverting surfactant is solubilized or inverted in the presence of water. The polymer-containing emulsion releases the polymer in water in a very short period of time.

The solubilized polymer may then be used as a flocculant. For use as a flocculant the water solution contains from 0.001 to 0.3, preferably from 0.01 to 0.1 percent of the polymer.

Examples

The following examples serve to give specific illustrations of the practice of this invention but they are not intended in any way to limit the scope of this invention.

Example 1

Preparation of monomer emulsion feed:

(i) Sodium acrylate solution: An acrylic acid solution containing 158.2 g of acrylic acid and 186.94 g of deionized water was neutralized with a freshly prepared 40 percent sodium hydroxide solution (about 229.09 g) to a final pH of 6.5. The neutralization was carried out at a temperature not exceeding 20°C to prevent premature polymerization from taking place.

(ii) Acrylamide solution: The solution was prepared by adding 205.69 g of acrylamide crystals crystals under vigorous stirring to 251.95 g of deionized water at a temperature below 25°C. Air was present during the dissolution to inhibit polymerization.

(iii) Oil-soluble monomer and surfactant mixture: A homogenous solution was prepared by dissolving 18.92 gm of a sorbitan monooleate (Span-80® supplied by Imperial Chemical Industries) into 339.5 g of Isopar-M® while stirring. Thereafter, 27.27 g of vinyl acetate was rapidly added and the system stirred for an additional five minutes to yield a uniform mixture.

(iv) Monomer emulsion feed: Into a Waring blender, containing mixture (iii), was added, under vigorous stirring, solutions (i) and (ii). The latter was combined with 0.06 g of ethylenediamine tetraacetic acid prior to its addition to ensure compositional uniformity of the finished monomer emulsion.

The monomer emulsion as prepared above was thoroughly deoxygenated by stirring under a vacuum for 10 minutes and subsequently breaking the vacuum with nitrogen; this procedure was repeated two more times. Thereafter, the monomer emulsion was kept at 25°C or below under a nitrogen atmosphere until its complete addition.The storage tank was equipped with a cooling coil (jacket), a temperature measuring device, and an air injection dip tube which can be used to stop the polymerization in case of an accidental initiation.

Initiator solution feed: This solution was prepared by dissolving 0.78 g of 2,2'-azobis(isobutyronitrile) dissolved in 17.78 g of toluene. The solution was purged with nitrogen before and during the course of polymerization.

Inhibitor solution: The solution was prepared by dissolving 0.78 g of a thiobisphenol (Santanox-R® supplied by Mansanto Chemical Co.) in 10 g of toluene.

The reactor consisted of a two-liter Pyrex® glass reactor equipped with a turbine agitator, two addition tunnels, a condenser, a thermemeter and a nitrogen inlet and outlet tube. An external heating/cooling bath was employed. The turbine agitator had a four-on-inch (2.54 cm) blade impeller and the blades were pitched at a 45° angle to the driving shaft.

The reactor was charged, under a nitrogen atmosphere, with 282.32 g (20 percent) of the monomer emulsion. While the nitrogen flow continued, heating was applied to bring the reaction temperature to 55°C. Once the temperature was stabilized, 3.91 g of the inititator solution was quickly added. Thereafter, both the monomer emulsion and the catalyst solution streams were continuously fed into the reactor at rates such that feeding was complete in about two hours. The induction time was usually very short and an exotherm may occur immediately after the initiator addition. After charging was complete, the polymerization was allowed to continue for two additional hours. During this period, sufficient cooling was provided to dissipate the heat of polymerization. The reactor temperature was maintained at 55±2°C. At the end of polymerization, the inhibitor solution was added and the reactor was allowed to cool to room temperature (about 25°C). The product was discharged through a two-layer cheese cloth. The conversion was usually quantitative and the finished emulsion contained about 30 percent by weight of polymer. The polymer had an intrinsic viscosity of 18.4 dl/g. as measured in a one normal aqueous sodium chloride solution. The emulsion was highly uniform and contained very fine particles which had diameters ranging from 0.2 to 2 µm.

Example 2

Preparation of monomer emulsion feed

(i) Sodium acrylate solution: An acrylic acid solution containing 124.84 g acrylic acid and 227.86 g of deionized water was neutralized with a freshly prepared 40 percent sodium hydroxide solution (about 173.39 g) to a final pH of 6.5. The neutralisation was carried out at temperatures not exceeding 20°C to prevent premature polymerization from taking place.

(ii) Acrylamide solution: This solution was prepared by adding 205.93 g of acrylamide crystals to 261.6 g of water under vigorous stirring at temperatures below 25°C. Air was present during the dissolution to inhibit polymerization.

(iii) Oil-soluble monomer and surfactant mixture: A homogenous solution was prepared by dissolving

19.12 g of Span-80® into 339.43 g of Isopar-M® under agitation. Thereafter, 66.6 g of ethyl acrylate was rapidly added and the system stirred for an additional five minutes to yield a uniform mixture.

The monomer emulsion feed was prepared and deoxygenated, the initiator solution feed and inhibitor solution were prepared and the monomers polymerized all by the procedure as described in Example 1.

The product was a milky white water-in-oil emulsion. Examination by an optical microscope showed that the average diameter of the suspended particles was about 0.2 to 2 μm. The polymer had an intrinsic viscosity of 16.4 dl/g as measured in a one normal aqueous sodium chloride solution.

Example 3

The procedure of Example 1 was exactly repeated except that the 2,2′-azobis(isobutyronitrile) initiator was replaced with the same amount of 2,2-azobis(2,4-dimethyl-valeronitrile (Vazo-52® suppled by E.I. duPont de Nemours Co.). A uniform milky white water-in-oil emulsion was produced. The average diameter of the suspended particles was measured by an optical microscope and found to be about 1.5 μm. The polymer had an intrinsic viscosity of 18.1 dl/g as measured in a one normal aqueous sodium chloride solution.

Example 4

The procedure of Example 1 was exactly repeated except that the 2,2′-azobis(isobutyronitrile) initiator was replaced with the same amount of 2,2-azobis(2,4-dimethyl-valeronitrile) and the polymerization was carried out at a temperature of 43°C instead of 55°C. A uniform, milky white water-in-oil emulsion was produced. The polymer had an intrinsic viscosity of 28.6 dl/g as measured in a one normal aqueous sodium chloride solution.

Example 5

The procedure of Example 4 was exactly repeated except that one-half the amount of initiator was used. The polymer product had an intrinsic viscosity of 29.7 dl/g as measured in a one normal aqueous sodium chloride solution.

Example 6

The procedure of Example 5 was exactly repeated except that the polymerization was carried out at a temperature of 40°C instead of 43°C. A uniform of milky white water-in-oil emulsion was obtained. The polymer product had an intrinsic viscosity of 30.6 dl/g as measured in a one normal aqueous sodium chloride solution. The suspended particles in the emulsion were found to have diameters ranging from 0.2 to 2 μm.

Example 7

The procedure of Example 1 was exactly repeated except: (a) the sodium acrylate solution was prepared using 28.22 g of acylic acid and 39.2 g of a 40 percent sodium hydroxide solution and 50 g of water, (b) the acrylamide solution contained 47.14 g of acrylamide, 72.75 g of water, and 0.02 g of ethylenediamine tetraacetic acid, and (c) the oil mixture was made from 4.4 g of Span-80®, 82 g of Isopar-M®, and 12.99 g of vinyl acetate and (d) a mixture containing 0.2 g of the monomethyl ether of hydroquinone, 3 g of water, and 2.5 g of Isopar-M® was introduced at the end of polymerization to act as an inhibitor. A uniform, milky white emulsion was produced. The conversion was quantitative. The recovered polymer was found to contain 12.83 mole percent of vinyl acetate, 52.19 mole percent of acrylamide, and 34.98 mole percent of sodium acrylate. The polymer had an intrinsic viscosity of 8.61 dl/g as measured in a one normal aqueous sodium chloride solution.

Example 8

The procedure of Example 1 was exactly repeated except: (a) the sodium acrylate solution was prepared using 48.34 g of acrylic acid 61.37 g of a 40 percent sodium hydroxide solution, and 66.6 g of water, (b) the acrylamide solution contained 62.85 g of acrylamide, 97.15 g of water, and 0.02 g of ethylenediamine tetraacetic acid, (c) the oil mixture was made fron 5.8 g of Span-80®, 113.3 g of Isopar-M®, and 9.5 g of vinyl acetate and (c) a mixture containing 0.26 g of the monomethyl ether of hydroquinone, 2.5 g of water, and 2.5 g of Isopar-M® was introduced at the end of polymerization to act an inhibitor. A uniform, milky white emulsion was produced. The recovered polymer was found to contain 10.14 mole percent of vinyl acetate, 55.55 mole percent of acrylamide, and 35.31 mole percent of sodium acrylate. The polymer had an intrinsic viscosity of 10.67 dl/g as measured in a one normal aqueous sodium chloride solution.

Example 9

The procedure of Example 2 was exactly repeated except: (a) the pH of the sodium acrylate solution was 9.37 instead of 6.5, (b) the initiator solution was prepared by dissolving 0.39 g of 2,2′-azobis(2,4-dimethyl-valeronitrile) in 18.78 g of toluene and (c) the polymerization was carried out at 40°C. A uniform product was obtained. The recovered polymer had an intrinsic viscosity of 28 dl/g as measured in a one normal sodium chloride solution.

Example 10

The procedure of Example 9 was exactly repeated except that the pH of the sodium acrylate solution

was 6.5. A uniform product was obtained. The recovered polymer had an intrinsic viscosity of 24.6 dl/g as measured in a one normal aqueous sodium chloride solution.

Example 11

The procedure of Example 2 was exactly repeated except: (a) the sodium acrylate solution was adjusted to a pH of 10.67, (b) an equivalent amount of 2,2-azobis (2,4-dimethyl-valeronitrile) was used instead of 2,2'-azobis(isobutyronitrile), and (c) the polymerization was carried out at a temperature of 43°C. A uniform water-in-oil emulsion was obtained. The recovered polymer had an intrinsic viscosity of 15.9 dl/g as measured in a one normal aqueous sodium chloride solution.

Example 12

The procedure of Example 2 was exactly repeated except: (a) an ammonium persulfate initiator was used in addition to the 2,2'-azobis(isobutyronitrile), and (b) an aqueous solution containing 0.3 g of ammonium persulfate and 3 g of water was introduced to the reaction vessel one-hour after the completion of the monomer addition. A uniform water-in-oil emulsion was obtained. The recovered polymer had an intrinsic viscosity of 10.34 dl/g as measured in a one normal aqueous sodium chloride solution.

Example 13

The procedure of Example 12 was exactly repeated except that the 2,2'-azobis(isobutyronitrile) was replaced with an equal amount of lauroyl peroxide. A milky-white, uniform emulsion was obtained. The recovered polymer had an intrinsic viscosity of 9.86 dl/g as measured in a one normal aqueous sodium chloride solution.

Example 14

The procedure of Example 13 was exactly repeated except that the lauroyl peroxide inititator was replaced with an equal amount of benzoyl peroxide. A uniform water-in-oil emulsion was obtained. The recovered polymer had an intrinsic viscosity of 9.85 dl/g as measured in a one normal aqueous sodium chloride solution.

Example 15

The procedure of Example 1 was exactly repeated excepts that the Span-80® was replaced with an equal amount of a sorbitan monostearate (Span-60® supplied by Imperial Chemical Industries). A uniform, milky white emulsion was obtained. The recovered polymer had an intrinsic viscosity of 18.1 dl/g as measured in a one normal aqueous sodium chloride solution.

Example 16

The procedure of Example 1 was exactly repeated except that the Span-80® was replaced with an equal amount of 1:1 mixture of sorbitol partial fatty esters (Atpet-100® supplied by Imperial Chemical Industries) and a sorbitan tristearate (Span-65® supplied by Imperial Chemical Industries). A uniform, milky white emulsion was obtained. The recovered polymer had an intrinsic viscosity of 17.9 dl/g as measured in a one normal aqueous sodium chloride solution.

Example 17

The procedure of Example 1 was exactly repeated, except that the Span-80® was replaced with an equal amount of a polyoxyethylene sorbitol beeswax derivative (G-1702 Supplied by Imperial Chemical Industries). A uniform, milky white emulsion was obtained. The recovered polymer had an intrinsic viscosity of 17.6 dl/g as measured in a one normal aqueous sodium chloride solution.

Example 18

A portion of the product prepared in Example 1 was thoroughly mixed with a water soluble surfactant, i.e., a polyoxyethylenated nonylphenol (Tergitol® NP-10 supplied by Union Carbide Corporation) to yield an emulsion containing about 1.5 percent by weight of the surfactant. This mixture can be rapidly dissolved in water with stirring. An aqueous solution containing 0.3 percent of this polymer had a typical Brookfield viscosity to about 2,400 mPa.s (Brookfield Viscometer Model HBT, Spindle No. 2, 10 RPM and at 25°C.).

Example 19

A portion of the product made in Example 2 was mixed with a water soluble surfactant, i.e., a polyoxyethylenated nonylphenol (Tergitol® NP 13 supplied by Union Carbide Corporation) to yield an emulsion containing about 1.5 percent by weight of the surfactant. An aqueous solution containing 1 percent by weight of this emulsion had a Brookfield viscosity of about 2,200 mPa.s (as measured by the procedure in Example 18).

Example 20

The procedure of Example 1 was exactly repeated except: (a) the acrylamide solution was prepared using a commercial 50 percent aqueous solution (Acrylamide-50 supplied by American Cyanamide) instead

of the acrylamide crystals (b) and one half the amount of 2,2'-azobis (2,4-dimethyl-valeronitrile) was substituted for the 2,2'-azobis(isobutyronitrile). A uniform and milky white emulsion was obtained. The recovered polymer had an intrinsic viscosity of 14.3 dl/g as measured in a one normal aqueous sodium chloride solution.

Example 21

The procedure of Example 1 was exactly repeated except: (a) the acrylamide solution was prepared using acrylamide-50 (described in Example 20), (b) an equal amount of 2,2'-azobis (2,4-dimethyl-valeronitrile) was substituted for the 2,2'-azobis(isobutyronitrile), (c) a double amount of ethylenediamine tetraacetic acid was used, and (d) the polymerization was carried out at a temperature of 52° instead of 55°C. A fine emulsion was obtained at the end of the polymerization. The recovered polymer had an intrinsic viscosity of 19.1 dl/g as measured in a one normal aqueous sodium chloride solution. A 0.3 percent aqueous solution of this polymer had a Brookfield viscosity of 2,912 mPa.s (Brookfield Viscometer Model HBT, Spindle No. 2, 10 RPM at 25°C).

Example 22

A (vinyl acetate-sodium acrylate) copolymer water-in-oil emulsion was prepared according to the following procedures: An aqueous solution was prepared by mixing, under cooling conditions, 96.49 g of acrylic acid, 163.75 g of water, 130 g of 40 percent sodium hydroxide solution and 0.02 g of ethylenediamine tetraacetic acid. Separately, an oil solution was prepared by mixing 5.8 g of Span-80®, 113.3 g of Isopar-M® and 6.5 g of vinyl acetate. The two solutions were combined in a high speed waring blender to give a uniform emulsion. A catalyst solution was prepared by dissolving 0.26 gpf 2,2'-azobis(isobutyronitrile) in 3.13 ml of acetone. The monomer emulsion was then deoxygenated as described in Example 1. The polymerization was carried out in the manner as in Example 1, except that a one-liter pyrex glass reactor equipped as described in Example 1, was used. The product produced was a milky white emulsion containing about 24 percent by weight of the polymer. The polymer had an intrinsic viscosity of 4.2 dl/g as measured in a one normal aqueous sodium chloride solution.

Example 23

A nonionic vinyl acetate-acrylamide copolymer was prepared according to the procedure as described in Example 22, except that the aqueous solution contained 125.96 g of acrylamide, 200.57 g of water and 0.02 g of ethylenediamine tetraacetic acid. The water-in-oil emulsion contained 26 percent by weight of active polymer. The polymer had an intrinsic viscosity of 3 dl/g as measured in a one normal aqueous sodium chloride solution.

Example 24

A cationic copolymer composed of the quarternization product of methylaminoethyl methacrylate, methyl chloride and hydroxyethyl acrylate was prepared according to the procedure as described in Example 22, except that the aqueous solution was made from 146.95 g of the quarternization product, 332.6 g of water and 0.02 g of ethylenediamine tetraacetic acid. The oil phase was composed of a fine mixture of 146.93 g of Isopar-M®, 5.8 g of Span-80®, and 20 g of hydroxyethyl acrylate. After the polymerization was completed, a fine and uniform emulsion was recovered. The polymer had an intrinsic viscosity of 6.1 dl/g as measured in a 3 percent sodium chloride solution.

Example 25

A cationic terpolymer composed of the quarternization product used in Example 24, acrylamide, and vinyl acetate prepared according to the procedure described in Example 22, except that the aqueous solution was made from 35.5 g of acrylamide, 332.6 g of water, 0.02 g of ethylenediamine tetraacetic acid and 138.4 g of the quaternization product. The oil solution was made from 5.8 gm of Span-80®, 113.3 g of Isopar-M® and 5 g of vinyl acetate. The finished water-in-oil emulsion contained about 20 percent by weight of active polymer. The polymer had an intrinsic viscosity of 6.1 dl/g as measured in a 3 percent aqueous sodium chloride solution.

Example 26

The procedure of Example 1 was exactly repeated with the exception that the deoxygenation of the monomer emulsion was performed by a continuous process described as follows: The monomer emulsion prepared according to Example 1(iv) was pumped through a thin-film devolatilizer operating under a vacuum of 272 mbar (200 mm of mercury) pressure and a nitrogen atmosphere. The operating conditions of the thin-film devolatilizer were adjusted such that the dissolved oxygen content in the deoxygenated monomer emulsion was reduced to below 3 ppm, preferably below 1 ppm. The reactor was charged, under a nitrogen atmosphere, with 282.32 (20 percent) of the deoxygenated monomer emulsion. While the nitrogen flow continued, the reaction temperature was raised to 55°. Once the temperature was stabilized, 3.91 g of the initiator solution was added. The monomer emulsion was then added continuously through the thin-film devolatilizer into the reaction at a rate such that the addition was complete in about two hours. The rest of the initiator solution was fed simultaneously as described in Example 1. After charging was

complete, the polymerization was allowed to continue for two additional hours. At the end of the polymerization, the inhibitor solution was added and the reactor was allowed to cool to room temperature (about 25°C). A fine and uniform water-in-oil emulsion was obtained. The conversion was greater than 99 percent and the recovered polymer had an intrinsic viscosity of 19.2 dl/g as measured in a one normal aqueous sodium chloride solution.

**Claims**

1. A semi-continuous process for producing a polymer water-in-oil emulsion, which process comprises:

(a) combining: (i) an aqueous solution comprising at least one water-soluble monomer and (ii) a mixture comprising a hydrophobic liquid, a hydrophobic monomer and an oil-soluble sufactant;

(b) homogenizing the mixture from (a) to form a water-in-oil emulsion;

(c) deoxygenating said homogenized water-in-oil emulsion;

(d) continually adding the homogenized water-in-oil emulsion to a reactor while adding thereto a deoxygenated initiator solution;

(e) heating the mixture from (d) under polymerization conditions so as to form a polymer water-in-oil emulsion, and

(f) recovering a polymer water-in-oil emulsion.

2. A process as defined in claim 1 wherein the water soluble monomer in (a) (i) is selected from one or more of the following: acrylamide, methacrylamide, acrylic acid, methacrylic acid, and their alkali metal salts, aminoalkyl acrylate, aminoalkyl methacrylate, dialkylaminoalkyl acrylate, dialkylaminoalkyl methacrylate, and their quarternized salts with dimethyl sulfate or methyl chloride, vinyl benzy dimethyl ammonium chloride, alkali metal and ammonium salts of 2-sulfoethylacrylate, alkali metal and ammonium salts of vinyl benzyl sulfonates, and maleic anhydride and 2-acrylamido-2-methylpropane sulfonic acid.

3. A process as defined in claims 1 or 2 werein the water soluble monomer in (a) (i) is selected from acrylamide or acrylic acid, or mixtures thereof, and alkali metal salts of acrylic acid.

4. A process as defined in any of claims 1—3 wherein the aqueous solution in (a) (i) contains from about 45 to about 80 percent of a combination of water and water soluble monomer(s).

5. A process as defined in any of claims 1—4 wherein the hydrophobic monomer in (a) (ii) is selected from a vinyl ester, an alkyl acrylate, an alkyl methacrylate, a vinyl ether, for instance an alkyl vinyl ether, acrylonitrile, styrene and its derivatives, N-vinyl carbazole, and mixtures thereof, preferably from vinyl acetate, ethylacrylate, butylvinyl ether, acrylonitrile, styrene, α-methylstyrene, N-vinyl carbazole, and mixtures thereof.

6. A process as defined in any of claims 1—5 wherein the hydrophobic liquid is selected from benzene, xylene, mineral oil, kerosene, petroleum oil, and mixtures thereof, and preferably is Isopar M®.

7. A process as defined in any of claims 1—6 wherein the oil-soluble surfactant has an HLB of from 1 to 10.

8. A process as defined in any of claims 1—7 wherein the mixture of (a) contains from 15 to 50 percent of the hydrophobic liquid and hydrophobic monomer(s).

9. A process as defined in any of claims 1—8 wherein the homogenization of (b) is carried out at a temperature of from 10 to 40°C.

10. A process as defined in any of claims 1—9 wherein the water-in-oil emulsion has particles whose diameters are from about 0.2 to about 5 μm.

11. A process as defined in any of claims 1—10 wherein the homogenized water-in-oil emulsion is deoxygenated in step (c) by subjecting it to a vacuum and/or nitrogen sparging.

12. A process as defined in any of claims 1—11 wherein the polymerization is carried out at a temperature of from 30 to 70°C.

13. A process as defined in any of claims 1—12 wherein the polymerization reaction rate is controlled by the introduction of air into the reaction.

14. A process as defined in any of claims 1—13 wherein an antioxidant is added to the reaction mass after polymerization.

15. A process as defined in any of claims 1—14 wherein the polymer in the water-in-oil emulsion has an intrinsic viscosity of from 2 to 40 dl/g as measured in an one normal aqueous sodium chloride solution at 25°C.

16. A process as defined in any of claims 1—15 wherein the polymer is a copolymer, terpolymer or tetrapolymer.

17. A process as defined in any of claims 1—16 wherein the polymers are of the following general formula:

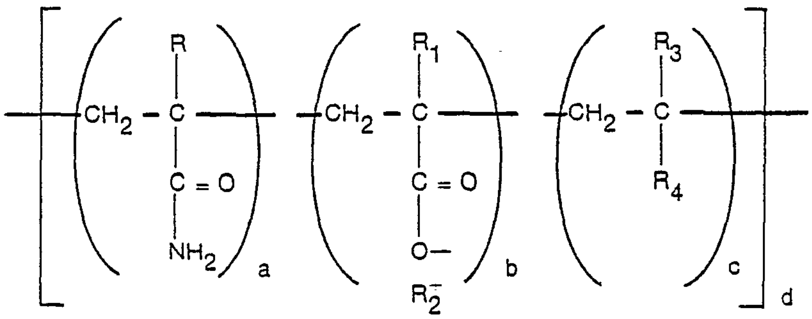

wherein R, $R_1$ and $R_3$ are independently hydrogen or methyl, $R_2^+$ is an alkali metal ion, $R_4$ is $OR_5$, where $R_5$ is an alkyl group having up to 5 carbon atoms,

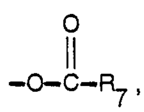 , wherein $R_7$ is either methyl or ethyl, 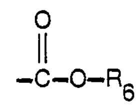 ,

phenyl or substituted phenyl, CN, or 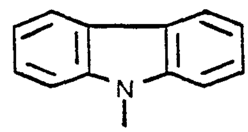

and $R_6$ is an alkyl group having up to 8 carbon atoms, and wherein (a) is from 0 to 90, (b) is from 0 to 90 (c) is from 0.2 to 20, with the proviso that (a) + (b) + (c) equal 100, and (d) is an integer of from 1,000 to 500,000.

18. A process as defined in any of claims 1—16 wherein the polymer is a terpolymer of the following formula:

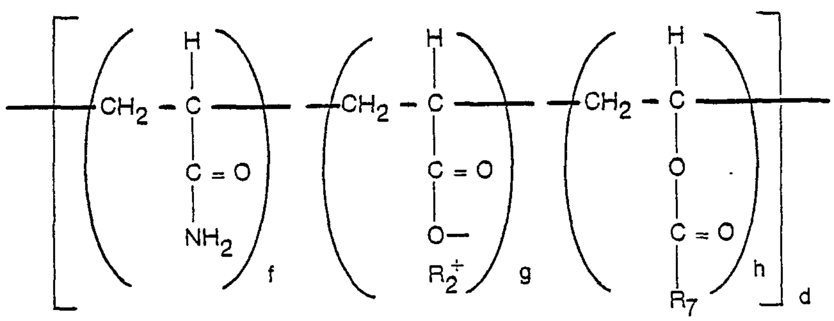

wherein $R_2^+$ is $Na^+$ or $K^+$, $R_7$ is methyl, ethyl, or butyl, and f is from 5 to 90 percent, g is from 5 to 90, h is from 0.2 to 20 with the proviso that (f) + (g) + (h) equal 100 and d is an integer of from 1000 to 500,000.

**Patentansprüche**

1. Halbkontinuierliches Verfahren zur Herstellung einer Wasser-in-Öl-Emulsion eines Polymers, welches Verfahren umfasst:

(a) Kombinieren (i) einer wässrigen Lösung, die mindestens ein wasserlösliches Monomer enthält, und (ii) einer Mischung, die eine hydrophobe Flüssigkeit, ein hydrophobes Monomer und ein öllösliches Tensid enthält;

(b) Homogenisieren der Mischung aus (a) zur Bildung eine Wasser-in-Öl-Emulsion;

(c) Desoxygenieren der homogenisierten Wasser-in-Öl-Emulsion;

(d) kontinuierliches Zugeben der homogenisierten Wasser-in-Öl-Emulsion in einen Reaktor unter Zugabe einer desoxygenierten Initiatorlöslung;

(e) Erhitzen der Mischung aus (d) unter Polymerisations-bedingungen, um eine Wasser-in-Öl-Emulsion eines Polymers zu bilden, und

(f) Gewinnen der Wasser-in-Öl-Emulsion.

2. Verfahren nach Anspruch 1, worin das wasserlösliche Monomer in (a) (i) ausgewählt ist unter einem oder mehreren der folgenden: Acrylamid, Methacrylamid, Acrylsäure, Methacrylsäure und deren Alkalimetallsalzen, Aminoalkylacrylat, Aminoalkylmethacrylat, Dialkylaminoalkylacrylat, Dialkylaminoalkylmethacrylat und deren quaternisierten Salzen mit Dimethylsulfat oder Methylchlorid, Vinylbenzyldimethylammoniumchlorid, Alkalimetall- und Ammoniumsalzen von 2-Sulfoethylacrylat, Alkalimetall- und Ammoniumsalzen von Vinylbenzylsulfonaten und Maleinsäureanhydrid und 2-Acrylamido-2-methylpropansulfonsaüre.

3. Verfahren nach Anspruch 1 oder 2, worin das wasserlösliche Monome in (a) (i) ausgewählt ist unter Acrylamid oder Acrylsäure oder Mischungen davon und Alkalimetallsalzen von Acrylsäure.

4. Verfahren nach irgendeinem der Ansprüche 1 bis 3, worin die wässrige Lösung in (a) (i) etwa 45 bis etwa 80% einer Kombination von Wasser und wasserlöslichem(n) Monomer(en) enthält.

5. Verfahren nach irgendeinem der Ansprüche 1 bis 4, worin das hydrophobe Monomer in (a) (ii) ausgewählt ist unter einem Vinylester, Alkylacrylat, Alkylmethacrylat, Vinylether, z. B. einem Alkylvinylether, Acrylnitril, Styrol und dessen Derivaten, N-Vinylcarbazol und Mischungen davon, vorzungsweise unter Vinylacetat, Ethylacrylat, Butylvinylether, Acrylnitril, Styrol, α-Methylstyrol, N-Vinylcarbazol und Mischungen davon.

6. Verfahren nach irgendeinem der Ansprüche 1 bis 5, worin die hydrophobe Flüssigkeit ausgewählt ist unter Benzol, Xylol, Mineralöl, Kerosin, Petroleumöl und Mischungen davon, und vorzugsweise Isopar M® ist.

7. Verfahren nach irgendeinem der Ansprüche 1 bis 6, worin das öllösliche Tensid einen HLB-Wert von 1 bis 10 hat.

8. Verfahren nach irgendeinem der Ansprüche 1 bis 7, worin die Mischung von (a) 15 bis 50% der hydrophoben Flüssigkeit und des oder der hydrophoben Monomeren enthält.

9. Verfahren nach irgendeinem der Ansprüche 1 bis 8, worin die Homogenisierung in (b) bie einer Temperatur von 10 bis 40°C durchgeführt wird.

10. Verfahren nach irgendeinem der Ansprüche 1 bis 9, worin die Wasser-in-Öl-Emulsion Teilchen mit einem Durchmesser von etwa, 0,2 bis etwa 5 µm aufweist.

11. Verfahren nach irgendeinem der Ansprüche 1 bis 10, worin die homogenisierte Wasser-in-Öl-Emulsion in Stufe (c) desoxygeniert wird, indem man sie einem Vakuum aussetzt und/oder Stickstoff einleitet.

12. Verfahren nach irgendeinem der Ansprüche 1 bis 11, worin die Polymerisation bei einer Temperatur von 30 bis 70°C durchgeführt wird.

13. Verfahren nach irgendeinem der Ansprüche 1 bis 1, worin die Polymerisationsgeschwindigkeit durch Einleiten von Luft in die Reaktion geregelt wird.

14. Verfahren nach irgendeinem der Ansprüche 1 bis 13, worin der Reaktionsmasse nach der Polymerisation ein Antioxidationsmittel zugesetzt wird.

15. Verfahren nach irgendeinem der Ansprüche 1 bis 14, worin das Polymer in der Wasser-in-Öl-Emulsion eine Grenzviskositätszahl von 2 bis 40 dl/g, gemessen in einer wässrigen 1 n Natriumchloridlösung bei 25°C, hat.

16. Verfahren nach irgendeinem der Ansprüche 1 bis 15, worin das Polymer ein Copolymer, Terpolymer oder Tetrapolymer ist.

17. Verfahren nach irgendeinem der Ansprüche 1 bis 16, worin die Polymeren die folgenden allgemeine Formel haben:

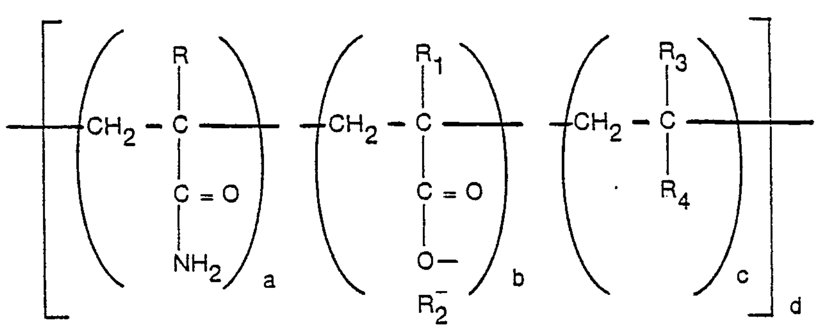

worin R, $R_1$ und $R_3$ unabhängig Wasserstoff oder Methyl sind $R_2^+$ ein Alkalimetallion ist, $R_4$ $OR_5$, wobei $R_5$ eine Alkylgruppe mit bis zu 5 Kohlenstoffatomen ist.

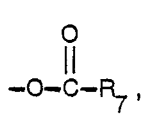, wobei $R_7$ entweder Methyl oder Ethyl ist, 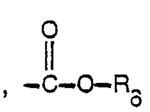,

Phenyl oder substituiertes Phenyl, CN oder 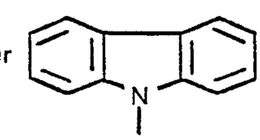

ist und $R_6$ eine Alkylgruppe mit bis zu 8 Kohlenstoffatomen ist, und worin (a) von 0 bis 90, (b) von 0 bis 90,

(c) von 0,2 bis 20, mit der Massgabe, dass (a) + (b) + (c) gleich 100 ist, und (d) eine ganze Zahl von 1000 bis 500 000 ist.

18. Verfahren nach irgendeinem der Ansprüche 1 bis 16, worin das Polymer ein Terpolymer der folgenden Formel ist:

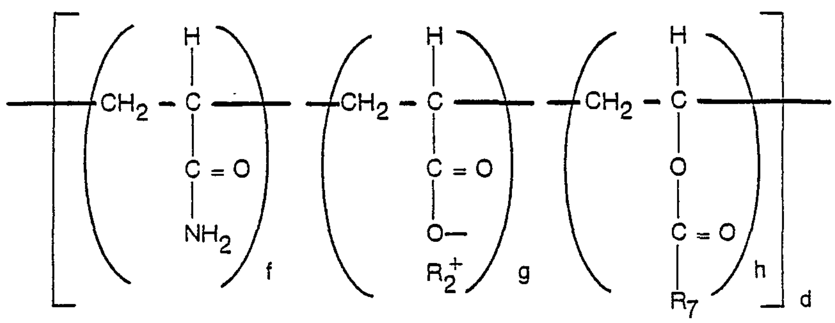

worin $R_2^+$ $Na^+$ oder $K^+$ ist, $R_7$ Methyl, Ethyl oder Butyl ist und f von 5 bis 90, g von 5 bis 90, h von 0,2 bis 20, mit der Massgabe, das (f) + (g) + (h) gleich 100 ist, und d eine ganze Zahl von 1000 bis 500 000 ist.

**Revendications**

1. Procédé semi-continu de production d'une émulsion eau-dans-huile de polymère, procédé qui consiste:

(a) à rassembler: (i) une solution aqueuse comprenant au moins un monomère hydrosoluble et (ii) un mélange comprenant un liquide hydrophobe, un monomère hydrophobe et un surfactant soluble dans l'huile;

(b) à homogénéiser le mélange venant de (a) pour former une émulsion eau-dans-huile;

(c) à désoxygéner ladite émulsion eau-dans-huile homogénéisée;

(d) à ajouter continuellement l'émulsion eau-dans-hile homogénéisée à un réacteur tout en y ajoutant une solution d'intiateur désoxygéné;

(e) à chauffer le mélange venant (d) dans des conditions de polymérisation de manière à former une émulsion eau-dans-huile de polymère, et

(f) à recueillir une émulsion eau-dans-huile de polymère.

2. Procédé suivant la revendication 1, dans lequel le monomère hydrosoluble indiqué en (a) (i) consiste en un ou plusieurs monomères choisis entre les suivants: acrylamide, méthyacrylamide, acide acrylique, acide méthacrylique et leurs sels de métaux alcalins, acrylate d'aminoalkyle, méthacrylate d'aminoalkyle, acrylate de dialkylaminalkyle, méthacrylate de dialkylaminoalkyle et leurs sels quaternisés avec le sulfate de diméthyle ou le chlorure de méthyle, chlorure de vinylbenzyldiméthylammonium, sels de métaux alcalins et d'ammonium de 2-sulfoéthylacrylate, sels de métaux alcalins et d'ammonium de vinylbenzylsulfonates, et anhydride maléique et acide 2-acrylamido-2-méthylpropanesulfonique.

3. Procédé suivant la revendication 1 ou 2, dans lequel le monomère hydrosoluble dans (a) (i) est choisi entre l'acrylamide et l'acide acrylique ou leurs mélanges et des sels de métaux alcalins d'acide acrylique.

4. Procédé suivant l'une quelconque des revendications 1 à 3, dans lequel la solution aqueuse indiquée en (a) (i) contient environ 45 à environ 80% en poids d'un mélange d'eau et d'un ou plusieurs monomères hydrosolubles.

5. Procédé suivant l'une quelconque des revendications 1 à 4, dans lequel le monomère hydrophobe indiqué en (a) (ii) est choisi entre un ester de vinyle, un acrylate d'alkyle, un méthacrylate d'alkyle, un éther de vinyle, par exemple un éther d'alkyle et de vinyle, l'acrylonitrile, le styrène et ses dérivés, le N-vinylcarbazole et leurs mélanges, de préference l'acétate de vinyle, l'acrylate d'éthyle, l'éther de butyle et de vinyle, l'acrylonitrile, le styrène, l'α-méthylstyrène, le N-vinylcarbazole et leurs mélanges.

6. Procédé suivant l'une quelconque des revendications 1 à 5, dans lequel la liquide hydrophobe est choisi entre le benzène, le xylène, une huile minérale, le kérosène, une huile de pétrole et leurs mélanges et est de préférence le produit Isopar M®.

7. Procédé suivant l'une quelconque des revendications 1 à 6, dans lequel le surfactant soluble dans l'huile a un équilibre hydrophile-liphophile de 1 à 10.

8. Procédé suivant l'une quelconque des revendications 1 à 7, dans lequel le mélange de (a) contient 15 à 50% du liquide hydrophobe et du ou des monomères hydrophobes.

9. Procédé suivant l'une quelconque des revendications 1 à 8, dans lequel l'homogénéisation de (b) est conduite à une température de 10 à 40°C.

10. Procédé suivant l'une quelconque des revendications 1 à 9, dans lequel l'émulsion huile-dans-eau a des particules dont les diamètres vont d'environ 0,2 à environ 5 µm.

11. Procédé suivant l'une quelconque des revendications 1 à 10, dans lequel l'émulsion eau-dans-huile homogénéisée est désoxygénée dans l'étape (c) par exposition à un vide et/ou à une injection d'azote.

12. Procédé suivant l'une quelconque des revendications 1 à 11, dans lequel la polymérisation est conduite à une température de 30 à 70°C.

13. Procédé suivant l'une quelconque des revendications 1 à 12, dans lequel la vitesse de réaction de polymérisation est réglée par l'introduction d'air dans la réaction.

14. Procédé suivant l'une quelconque des revendications 1 à 13, dans lequel un antioxydant est ajouté au mélange réactionnel après la polymérisation.

15. Procédé suivant l'une quelconque des revendications 1 à 14, dans lequel le polymère dans l'émulsion eau-dans-huile a une viscosité intrinsèque de 2 à 40 dl/g, mesurée dans une solution aqueuse de chlorure de sodium 1N à 25°C.

16. Procédé suivant l'une quelconque des revendications 1 à 15, dans lequel le polymère est un copolymère, un terpolymère ou un tétrapolymère.

17. Procédé suivant l'une quelconque des revendications 1 à 16, dans lequel les polymères répondent à la formule générale suivante:

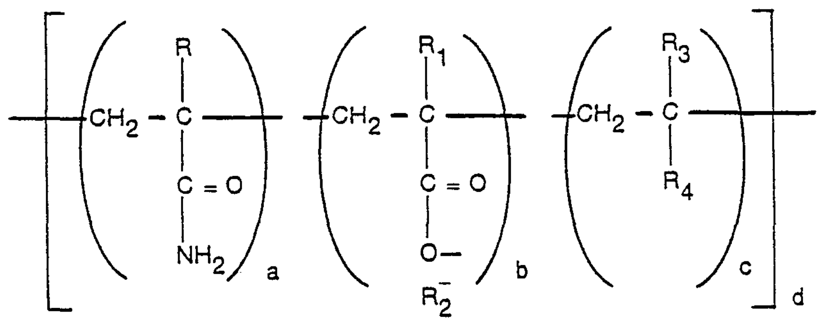

dans laquelle R, $R_1$ et $R_3$ représentent indépendamment l'hydrogène ou le radical méthyle, $R_2^+$ est un ion de métal alcalin, $R_4$ est un groupe $OR_5$ dans lequel $R_5$ est un groupe ayant jusqu'à 5 atomes de carbone,

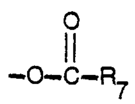 où $R_7$ est un radical méthyle ou éthyle, 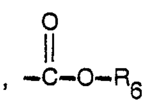,

phényle ou phényle substitué, CN ou 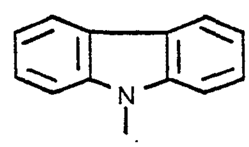

et $R_6$ est un groupe alkyle ayant jusqu'à 8 atomes de carbone, et (a) a une valeur de 0 à 90, (b) a une valeur de 0 à 90, (c) a une valeur de 0,2 à 20, sous réserve que la somme (a) + (b) + (c) soit égale à 100, et (d) est un nombre entier de 1000 à 500 000.

18. Procédé suivant l'une quelconque des revendications 1 à 16, dans lequel le polymère est un terpolymère de formule suivante:

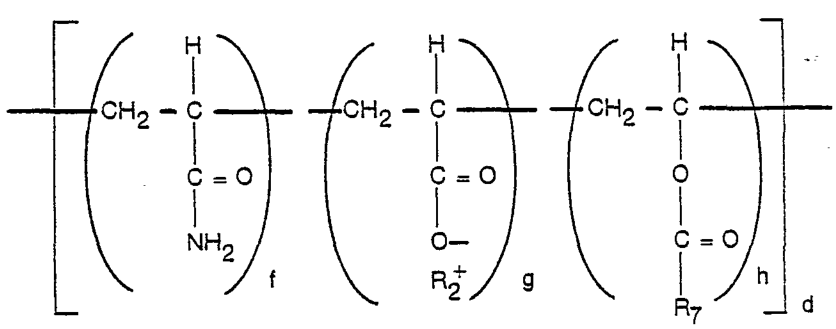

dans laquelle $R_2^+$ représente $Na^+$ ou $K^+$, $R_7$ est un groupe méthyle, éthyle ou butyle et f a une valeur de 5 à 90%, g a une valeur de 5 à 90, h a une valeur de 0,2 à 20, sous réserve que la somme (f) + (g) + (h) soit égale à 100, et d est un nombre entier de 1000 à 500 000.